# EUROPEAN PATENT SPECIFICATION

(11) **EP 0 907 045 B1**
(45) Date of publication and mention of the grant of the patent: **04.09.2002**
(21) Application number: 97830487.1
(22) Date of filing: 02.10.1997
(51) Int. Cl.: F16K 1/00, F16K 1/14, F16K 11/056

(54) **Valve assembly for heating systems and water-heating apparatuses and method for its manufacture**
Ventilanordnung für Heizsysteme und Wasserheizgeräte und Verfahren zu ihrer Herstellung
nEnsemble de soupape pour des systèmes de chauffage et des appareils de chauffage d'eau, et procédé de sa fabrication.

(43) Date of publication of application: 07.04.1999
(73) Proprietor: Scanferla, Giorgio, I-36061 Bassano del Grappa (Vicenza) (IT)
(72) Inventor: Scanferla, Giorgio, I-36061 Bassano del Grappa (Vicenza) (IT)
(74) Representative: Bottero, Claudio

(56) References cited:
- EP-A- 0 321 129
- EP-A- 0 679 821
- FR-A- 596 511
- FR-A- 1 420 815
- FR-A- 2 067 404
- FR-A- 2 128 931
- FR-A- 2 128 964
- US-A- 4 316 481

## Description

### Field of the Invention

The present invention relates to a valve assembly for heating systems and water-heating apparatuses.

More particularly, the valve assembly of this invention is preferably, though not exclusively, intended for application to domestic heating systems and water-heating apparatuses, such as for example boilers of the so-called combined type.

Throughout this description and the appended claims, the expression 'boiler of the combined type' is used to indicate a boiler adapted to generate hot water for space heating, or primary water, as well as hot water for sanitary use.

The invention also concerns a method of manufacturing a valve assembly as above indicated.

### Background Art

It is well known that water-heating apparatuses, and heating systems in general, require automatic valves capable of cutting off (two-way valves) or diverting (three-way valves) the fluid flowing through the circuits provided therein. Such valves are generally equipped with a shutter which assures the desired service by opening or closing a respective receiving seat (two-way valves) or by alternately opening and closing opposite receiving seats (three-way valves).

Throughout this description and the appended claims, the term 'fluid' is used to indicate any substance in liquid or gaseous form flowing through the valve assembly. Preferably, but not exclusively, the fluid referred to hereinafter is water.

Reference will also be made, by way of non-limitative example, to a three-way valve, it being understood that similar considerations would also apply to two-way valves.

As is known, high efficiency and reliability in operation of the valve are the prerequisites of a valve design and selection, whether it is of the two- or three-way type.

To this aim, the shutter, once positioned in its seat, must be adapted to shut off the fluid in a fluid-tight manner, thereby to ensure that no fluid can leak out under working pressure.

This requirement is met by either achieving a mating engagement between the shutter and its respective valve seat(s) by means of mating surfaces thereof, and by selecting a suitable material for the shutter.

Among the various types of valves available on the market, widespread acceptance has been gained in recent years by valves provided with a shutter made of an elastomeric material and essentially spherical in shape, which shutter is mounted at the end of a pivoting arm. In three-way valves, the spherical shutter is reciprocated between two opposite valve seats provided upstream of the two fluid outlet conduits by means of an external driving means.

A shutter of this type has the advantage of being self-supported, in the sense that it provides at one time a supporting function, given by the body of elastomeric material, and a sealing function, given by its elastic properties. In addition, its spherical surface ensures low pressure drops in operation.

Another valve known in the art for use in wall hydrants and possessing the features defined in the preamble of attached claim 1, is disclosed by US patent n. 4,316,481.

While substantially achieving their objective, valves of the above type are affected by a number of drawbacks which have not been remedied heretofore.

A first drawback is related to the high manufacturing cost of such valves, essentially due to the need of carrying out an accurate machining of the sealing surfaces and to the need of providing precision-made shutter actuation mechanisms.

The shutter of such valves indeed reiterately moves along a curvilinear travel path from one seat to the other. It follows that a fluid-tight seal can only be achieved if the shutter is exactly positioned at the very centre of its seat at the end of its stroke, such that a mating fit with the seat will provide the desired fluid-tight seal. This requires that the surfaces be machined to an accurate finish, and that particularly complicated high-precision arrangements be made for displacing the shutter.

The manufacturing cost of conventional valves with a spherical shutter, furthermore, is enhanced by the constructional features that they should possess in order for the shutter to be mounted inside the valve body. For a truly tight fit, in fact, the shutter diameter should be suitably larger than that of the valve seat(s). This involves the need of providing a service window through the valve for inserting the shutter when assembling the valve, which window must be subsequently sealingly closed with a tightly fitting cover.

A further drawback of the above identified conventional valves is related to the high energy consumption involved by the fact that, to ensure a tight closure during the valve operation, the shutter must be held against its seat under a compressive force continuously applied by an electric motor included in the shutter driving means. This motor is particularly expensive, since it should be kept in an excited state, while the shutter is held against its seat, in order to ensure that the desired compressive force is exerted and the shut-off function duly provided.

### Summary of the Invention

The technical problem underlying the present invention is accordingly that of providing a valve assembly which is simple in construction, inexpensive to make, and possessing such structural and functional features as to overcome the aforementioned drawbacks with regard to the prior art.

According to a first aspect of the invention, this problem is solved by a valve assembly as defined in attached claim 1.

Throughout the description which follows and the appended claims, the expression 'shutter of substantially spherical shape' encompasses both a shutter having a fully spherical shape and a shutter formed with one or more partially rectilinear faces but having at least one curvilinear or frusto-conical sealing surface. Thus, for example, reference will be made hereinafter to either a spherical shutter or to a substantially cylindrical shutter having suitably shaped, e.g. frusto-conical or curvilinear, connecting portions at the regions thereof adapted to make a fluid tight seal.

Thus, according to the invention, an inexpensive valve assembly of simple construction can advantageously be provided which both ensures low pressure drops and a fluid tight seal under working pressure.

The rectilinear travel of the shutter in its guiding and sliding seat, in fact, allows a simpler and more economical driving means to be used, resulting in a simplified valve construction and in a drastic reduction of its manufacturing costs.

In addition, the use of a spherical shutter made of an elastically deformable material allows to overcome the drawbacks associated to the need of having a service window for assembling the shutter into the valve.

In fact, the Applicant realised that a substantially spherical shutter of an elastically deformable material could be inserted into its guiding and sliding seat by compressing the same through one of the valve seats. It was found that the elastically deformable material forming the shutter may be deformed by at least 30% of its diameter or maximum cross size while still being within its elastic limit, i.e. without undergoing to plastic deformations of permanent character. This means that a substantially spherical shutter having a diameter of 23 mm, for example, can be deformed and compressed through a hole having a diameter of 16 mm. This means that, by applying a sufficient force, a substantially spherical shutter of an elastically deformable material can be inserted through one of the seats (usually having a diameter of 18 mm) without damaging the shutter. In this way, the valve no longer requires to be made with additional openings for the insertion of the shutter, which is advantageous both in terms of ease of manufacture and cost.

For the purpose of this invention, the elastically deformable material constituting the shutter may be selected from the group comprising: acrylonitrile rubber (NBR), polychloroprene rubber (CR), fluorinated rubber (FP), and ethylene-propylene-diene terpolymers (EPDM). Advantageously, all these materials are adapted to withstand elastic deformations of a reversible character as the shutter is being force-fitted into its guiding and sliding seat.

Advantageously, the shutter guiding and sliding seat is substantially cylindrical in shape and has substantially the same diameter as the shutter. In this way, the shutter is guided coaxially with such seats in its reciprocating stroke towards and away from the valve seat(s), with no need for precision driving mechanisms and accurate machining of the sliding surfaces adapted to ensure a proper fit.

Advantageously, the driving means comprises linear driving means arranged to act on a stem attached to the shutter, and operated by an electric motor. Such means are mechanically simpler and less expensive than the driving means employed in conventional valves. In addition, simpler engineering (less component parts) advantageously involves a reduced risk of failures.

Also, by using a threaded shaft formed with an irreversible pitch thread (to be explained in detail hereinafter), the shutter can be retained in its seat without keeping the motor in an excited state. Accordingly, a simpler and more economical motor can be used, and power consumption lowered.

Finally, the use of linear driving means allows to achieve at a very low cost, by adopting a step-by-step electric motor, a modulating valve, i.e. a valve capable of regulating the flow rate of the fluid leaving the valve assembly.

Advantageously, said at least one valve seat comprises a flaring surface formed at an opposite side with respect to an edge of sealing contact with the shutter, said flaring surface having a flaring angle α of from 15° to 40°. In this way, it is possible to facilitate the insertion of the shutter into its guiding and sliding seat.

Advantageously, the valve assembly further includes a plug, mounted on the valve body in a fluid-tight manner, wherethrough the shutter stem is guided for sliding movement.

Advantageously, the plug is effective to isolate in a fluid-tight manner the shutter driving means, so as to keep the latter separated from the water circuit. Thus, the electric or mechanical portions of such means can be serviced without opening the valve, that is without the system having to be drained empty.

According to a second aspect of the invention, a method is provided of manufacturing a valve assembly as above described which comprises the steps of:
providing a guiding and sliding seat for a shutter, upstream of said at least one valve seat, said guiding and sliding seat being wider than the passageway of said at least one valve seat;
inserting a shutter of substantially spherical shape and made of an elastically deformable material in said guiding and sliding seat by forcing the same through said at least one valve seat;
providing a shutter driving means downstream of said at least one valve seat.

This method allows to manufacture a valve which is of simple construction and inexpensive, by means of a sequence of manufacturing steps which can be carried out at a low cost on large-volume production lines.

### Brief Description of the Drawings

Additional features and advantages of the present invention will be apparent from the following detailed description of a preferred embodiment thereof, given by way of non-limitative example with reference to the accompanying drawings. In the drawings:
Figure 1 is a longitudinal cross section of a valve assembly according to the invention, shown in a first operating condition;
Figure 2 is a longitudinal cross section schematically showing a detail of the valve assembly shown in Figure 1 in a second operating condition.

### Detailed Description of the Preferred Embodiment

Generally shown at 1 in the drawing figures is a valve assembly according to the invention. In particular, the valve assembly 1 is a three-way valve intended for installation on household water-heating apparatuses, e.g. household gas-fired boilers.

The valve assembly 1 essentially comprises a valve body 2 in which a fluid inlet conduit 3, a first fluid outlet conduit 4a, and a second fluid outlet conduit 4b are formed.

An essentially cylindrical central chamber 5, wherein a mating-shape shutter 6 is guided for sliding movement, is formed between the fluid inlet conduit 3 and the fluid outlet conduits 4a, 4b.

In the embodiment shown, the shutter 6 is substantially spherical in shape, and is entirely made of acrylonitrile rubber (NBR).

A fluid inlet opening 7 is provided at the inlet end of the fluid inlet conduit 3, and a first fluid outlet opening 8a and a second fluid outlet opening 8b are respectively provided downstream of the fluid outlet conduits 4a and 4b,.

Thus, inside the valve body 2 there are defined:
i) a first flowpath 9a extending between the fluid inlet opening 7 and the first fluid outlet opening 8a, which includes: the fluid inlet conduit 3, the central chamber 5 and the first fluid outlet conduit 4a; and
ii) a second flowpath 9b extending between the fluid inlet opening 7 and the second fluid outlet opening 8b, which includes: the fluid inlet conduit 3, the central chamber 5 and the second fluid outlet conduit 4b.

Near the openings 7, 8a and 8b, the fluid inlet and outlet conduits 3, 4a and 4b are externally threaded for threadably coupling to the ends of threaded fittings (not shown) of respective water circuits, also not shown.

A first opening 10a is defined within the first flowpath 9a for placing the central chamber 5 in fluid communication with the first fluid outlet conduit 4a, which opening essentially forms a respective first valve seat against which the shutter 6 can be positioned in sealing relationship.

In particular, the first opening 10a has an edge of sealing contact 11 with the shutter 6 and, at the opposite side with respect to such edge, a flaring surface 12 having a flaring angle α of from 15° to 40°.

Likewise, a second opening 10b is defined within the second flowpath 9b for placing the central chamber 5 in fluid communication with the second fluid outlet conduit 4b, which opening essentially forms a respective second valve seat against which the shutter 6 can be positioned in sealed relationship.

For convenience of discussion, the central chamber 5 and the openings 10a, 10b will be referred to hereinafter as: shutter guiding and sliding seat, and: first and second valve seats, respectively.

Advantageously, the guiding and sliding seat 5 substantially has the same diameter as the shutter 6, so as to guide the same along its sliding movement in coaxial relationship with the valve seats 10a and 10b.

The shutter 6 can be displaced within said guiding and sliding seat 5 along a substantially rectilinear travel path between first and second positions where it closes in a fluid-tight manner the first and second valve seats 10a, 10b, respectively; thus, said seats can be opened and/or closed, thereby opening and/or closing the first and second flowpaths 9a, 9b.

The shutter 6 is secured, by means of a pair of elastic rings 13a, 13b, at one end of a stem 14 which is guided for sliding movement inside a corresponding bore 15 axially formed through a plug 16 mounted in a fluid-tight manner in a cylindrical tubular portion 17 integrally formed with the valve body 2.

In particular, the plug 16 is received in a bore 18 axially formed in the cylindrical tubular portion 17, and is provided with a flange 19 adapted to cooperate in abutting relationship with an annular detent surface 20 internally formed in the bore 18. An annular gasket 21 is interposed between the plug 16 and the valve body 2.

For easier sliding of the stem 14, the plug 16 includes a bush 22 made of a suitable anti-friction material which is received in a respective annular seat coaxially formed within the bore 18.

An additional annular gasket 23, mounted adjacent to the bush 22, provides the necessary sealing with the stem 14 to prevent fluid leakouts.

To provide for a proper positioning of the plug 16, a ring 24 is arranged within a respective annular seat 25 internally formed in the bore 18.

Above this seat 25, the cylindrical tubular portion 17 is formed with a plurality of radial holes 26 circumferentially arranged and equally spaced from one another, adapted to drain the cylindrical tubular portion 17 of any fluid that may have leaked through the plug 16.

The valve assembly 1 further comprises means 27 for driving the shutter 6 along the guiding and sliding seat 5, which driving means is arranged to act on a spherical tailpiece 28 formed at the free end of the stem 14.

The driving means 27 is mounted in the cylindrical tubular portion 17 and comprises an electric motor 29, conventionally powered by means of an electric supply cable 30, which is associated with a linear actuator means 31. In particular, the motor 29 is mounted on a baseplate 32 attached to the free end of the cylindrical tubular portion 17 by conventional fasteners 33 (e.g., screws).

The linear actuator means 31 comprises in turn a shaft 34 having a threaded shaft portion in threaded engagement with an internally threaded metal core 35 which is placed within the windings 36 of the motor 29 and rotated therewith. This rotation is guided by a roll bearing 37 mounted at the top of motor 29.

In a preferred embodiment, the threaded portion of the shaft 34 is formed with an irreversible pitch thread.

The shaft 34 is provided at its lower end, with a fork head 38 adapted to removably receive therein the spherical tailpiece 28 of the stem 14, so that the stem 14 can be joined to the linear actuator means 31.

Advantageously, the coupling of the stem 14 to the linear actuator means 31 is of a reversible type: in fact, for releasing the stem 14 from the fork head 38, it is sufficient to laterally pull the spherical tailpiece 28.

The motor 29 and threaded portion of the shaft 34 protruding out of the cylindrical tubular portion 17 are advantageously protected by a box-type cover 39 snap fitted onto the cylindrical tubular portion 17.

The operation of the valve assembly 1 described above allows to selectively deliver the fluid to the water circuits associated with the first and second flowpaths 9a, 9b.

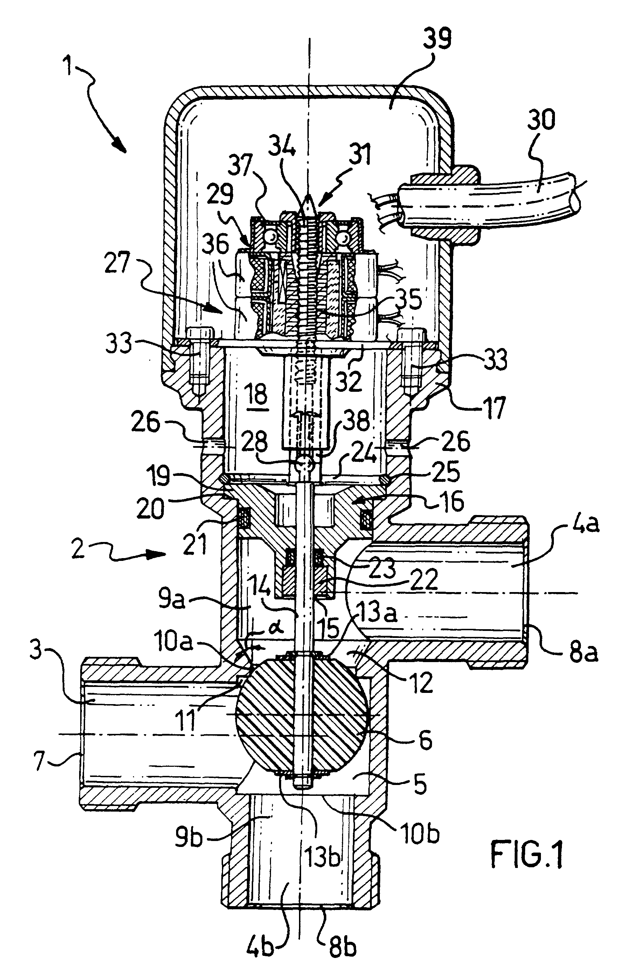

Assume for simplicity that the fluid is to be delivered to the water circuit associated to the flowpath 9b. In this case, the shutter 6 would be positioned to close the first valve seat 10a and cut off the first flowpath 9a (see Figure 1). The incoming fluid to the valve assembly 1 through the fluid inlet opening 7 will then flow along the second flowpath 9b and through the second outlet opening 8b to the second water circuit associated therewith.

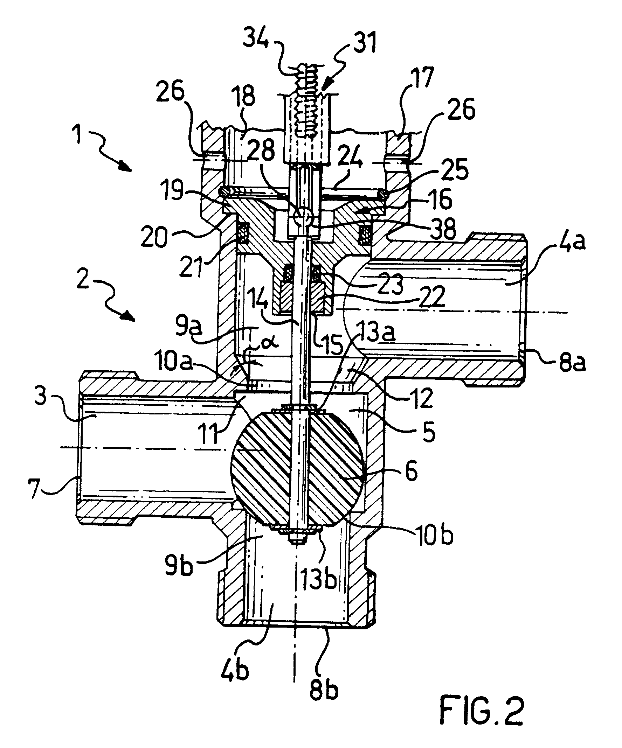

Assume now that the fluid is to be delivered to the water circuit associated to the flowpath 9a. For this to take place, the shutter 6 must be shifted to a second operating position, such as that shown in Figure 2.

In this position, the shutter 6 will close the second valve seat 10b and cut off the second flowpath 9b. The incoming fluid to the valve assembly 1 through the fluid inlet opening 7 will then flow along the first flowpath 9a and through the first outlet opening 8a to the first water circuit associated therewith.

While moving from the first working position to the second, the shutter 6 travels along a substantially rectilinear path within its guiding and sliding seat 5.

The movement of the shutter 6 is accomplished by exciting the windings 36 of the electric motor 29 with a supply current. This excitation current generates a magnetic field which rotates the metal core 35, which induces in turn a translation movement of the shaft 34, the threaded portion of which is thread-engaged in the core. This results in a vertical translation movement of the stem 14 associated to the shutter 6.

By reversing the current flow through the windings 36, and along therewith, the direction in which the metal core 35 is rotated, the direction of the shutter 6 translation movement can be quite simply reversed.

The valve assembly 1 described in the foregoing can be manufactured by the steps of:
providing the guiding and sliding seat 5 for the shutter 6 upstream of the valve seat 10a, said guiding and sliding seat 5 having a width wider than that of the passageway of the valve seat 10a;
inserting the shutter 6 into the guiding and sliding seat 5 by compressing the same through the valve seat 10a;
providing the driving means 27 for the shutter 6 downstream of the valve seat 10a.

Practical tests have shown that the shutter 6 can be compressed through the seat 10a by applying an appropriate force and without damaging the shutter 6 nor the seat.

Thus, for example, a substantially spherical shutter 6 having a diameter of about 23 mm can be inserted into the guiding and sliding seat 5 by compressing the same through a valve seat 10a having a diameter of about 18 mm (these being usual values in the art), without departing from the range of elastic deformation of the rubber which forms the body of the shutter 6.

The operation involves application of a force of 50 to 80 kg by a suitable pusher, e.g. one operated by a conventional hydraulic cylinder.

Conversely, since the working differential pressures designed for the valve 1 would amount to less than 1 bar --meaning, for a seat having a diameter of 18 mm, maximum working forces of less than about 2.5 kg, that is largely smaller than said compressive force -- there exists no practical possibility for the shutter 6 to jam within, or even worse, extrude through one of the valve seats 10a, 10b.

The numerous advantages afforded by the valve assembly of this invention can be readily appreciated in the light of the foregoing description.

A first important advantage is that the rectilinear movement of the shutter within its guiding and sliding seat allows to use simpler and less expensive driving means than those used in conventional spherical shutter valves, thereby simplifying the valve construction as a whole and drastically cutting down manufacturing costs.

Furthermore, the use of a spherical shutter made of an elastically deformable material, besides providing an adequately tight fit and low pressure drops, allows to overcome the drawback associated with the need of providing a service window for mounting the shutter inside the valve.

Also, the shutter reciprocation is guided between the seats coaxially with the latter, and no precision driving mechanisms and accurate machining of the sealing surfaces are required to ensure a properly aligned fit.

The shutter, moreover, can be held against its corresponding seat without the motor having to be kept excited. This allows to use a simpler and less expensive motor and to reduce energy consumptions.

In addition, by using linear actuator means and a step-by-step motor, it is possible to manufacture a modulating valve at a very low cost.

Finally, the shutter driving means are structurally separated from the water circuit, so that the electric or mechanical portion of such means can be serviced without opening the valve, that is, without emptying the water circuit in which the valve is incorporated.

## Claims

1. A valve assembly for heating systems and water-heating apparatuses, comprising:
a valve body (2) wherein a fluid inlet opening (7) and at least one fluid outlet opening (8a,8b) are defined;
a flowpath (9a,9b) extending between said fluid inlet opening (7) and said at least one fluid outlet opening (8a,8b);
at least one valve seat (10a,10b) formed in said valve body (2) and positioned in the flowpath (9a,9b);
a shutter (6) of substantially spherical shape, made of an elastically deformable material, reciprocable by a driving means (27) between a first and a second position whereat it respectively opens and closes said at least one valve seat (10a,10b), said shutter (6) being guided for sliding movement along a substantially rectilinear travel path in a respective guiding and sliding seat (5) having a substantially mating shape, formed in said valve body (2);
**characterised in that** the shutter (6) can be inserted into said guiding and sliding seat (5) by compressing the shutter (6) through one of said valve seats (10a,10b) and **in that** the respective sizes of the shutter (6) and of said at least one seat (10a,10b) are such that the shutter (6) can be inserted through said at least one valve seat (10a,10b) without undergoing permanent plastic deformations.

2. A valve assembly according to Claim 1, wherein the guiding and sliding seat (5) for the shutter (6) is substantially cylindrical in shape and has substantially the same diameter as the shutter (6).

3. A valve assembly according to Claim 1, wherein the driving means (27) comprises a linear actuator means (31) arranged to act on a stem (14) attached to the shutter (6) and operated by an electric motor (29).

4. A valve assembly according to Claim 1, wherein the shutter (6) is made of a material selected from the group comprising: acrylonitrile rubber (NBR), polychloroprene rubber (CR), fluorinated rubber (FP), and ethylene-propylene-diene terpolymers (EPDM).

5. A valve assembly according to Claim 1, wherein said at least one valve seat (10a,10b) comprises a flaring surface (12), formed at an opposite side with respect to an edge of sealing contact (11) with the shutter (6), said flaring surface having a flaring angle (α) of from 15° to 40°.

6. A valve assembly according to Claim 1, further comprising a plug (16), mounted in a fluid-tight manner inside a cylindrical tubular portion (17) integrally formed with said valve body (2), wherethrough the shutter (6) stem (14) is guided for sliding movement, said plug (16) being adapted to isolate in a fluid-tight manner the driving means (27) of the shutter (6).

7. A valve assembly according to Claim 3, wherein the linear actuator means (31) comprises a shaft (34) provided with a fork head (38) adapted to removably receive a spherical tailpiece (28) formed on a free end of the stem (14).

8. A method of manufacturing a valve assembly for heating systems and water-heating apparatuses according to claim 1, comprising the steps of:
providing a guiding and sliding seat (5) for a shutter (6), upstream of said at least one valve seat (10a,10b), said guiding and sliding seat (5) being wider than the passageway of said at least one valve seat (10a,10b);
inserting a shutter (6) of substantially spherical shape and made of an elastically deformable material in said guiding and sliding seat (5) by compressing the same through said at least one valve seat (10a, 10b);
providing driving means (27) for the shutter (6) downstream of said at least one valve seat (10a,10b).

## Patentansprüche

1. Ventilanordnung für Heizungssysteme und Wasserheizungsvorrichtungen mit:
einem Ventilkörper (2), in dem eine Flüssigkeitseinlassöffnung (7) und mindestens eine Flüssigkeitsauslassöffnung (8a, 8b) festgelegt sind;
einem Strömungsweg (9a, 9b), der sich zwischen der Flüssigkeitseinlassöffnung (7) und der mindestens einen Flüssigkeitsauslassöffnung (8a, 8b) erstreckt;
mindestens einem Ventilsitz (10a, 10b), der in dem Ventilkörper (2) ausgebildet und in dem Strömungsweg (9a, 9b) angeordnet ist;
einem Verschluss (6) von im wesentlichen kugelförmiger Gestalt, der aus einem elastisch verformbaren Material besteht und durch ein Antriebsmittel (27) zwischen einer ersten und einer zweiten Stellung bewegbar ist, in denen er den mindestens einen Ventilsitz (10a, 10b) öffnet bzw. schließt, wobei der Verschluss (6) zur Gleitbewegung entlang eines im wesentlichen geradlinigen Bewegungspfades in einem entsprechenden Führungs- und Gleitsitz (5) geführt ist, der eine in dem Ventilkörper (2) ausgebildete, im wesentlichen angepasste Form aufweist;
**dadurch gekennzeichnet, dass** der Verschluss (6) durch Drücken des Verschlusses (6) durch einen der Ventilsitze (10a, 10b) in den Führungs- und Gleitsitz (5) eingebracht werden kann, und dass die jeweiligen Größen des Verschlusses (6) und des mindestens einen Sitzes (10a, 10b) derart sind, dass der Verschluss (6) durch den mindestens einen Ventilsitz (10a, 10b) eingebracht werden kann, ohne bleibende plastische Verformungen zu erfahren.

2. Ventilanordnung nach Anspruch 1, bei der der Führungs- und Gleitsitz (5) für den Verschluss (6) eine im wesentlichen zylindrische Form hat und im wesentlichen den gleichen Durchmesser wie der Verschluss (6) aufweist.

3. Ventilanordnung nach Anspruch 1, bei der das Antriebsmittel (27) ein lineares Betätigungsmittet (31) umfasst, das auf einen an dem Verschluss (6) befestigten Stempel (14) zu wirken vermag und von einem Elektromotor (29) betrieben ist.

4. Ventilanordnung nach Anspruch 1, bei der der Verschluss (6) aus einem Material besteht, das aus der Gruppe ausgewählt ist, welche Acrylnitrilgummi (NBR), Polychloroprengummi (CR), fluorierten Gummi (FP) und Ethylenpropylendienterpolymere (EPDM) umfasst.

5. Ventilanordnung nach Anspruch 1, bei der der mindestens eine Ventilsitz (10a, 10b) eine konisch erweiterte Oberfläche (12) umfasst, die an einer gegenüberliegenden Seite bezüglich einer Kante im Dichtkontakt (11) mit dem Verschluss (6) ausgebildet ist, wobei die konisch erweiterte Oberfläche einen Konuswinkel (α) von 15° bis 40° aufweist.

6. Ventilanordnung nach Anspruch 1, die ferner einen Stopfen (16) umfasst, der in fluiddichter Weise in einem integriert mit dem Ventilkörper (2) ausgebildeten, zylindrischen, rohrförmigen Abschnitt (17) angebracht ist, durch den der Verschluss(6)-Stempef (14) zur Gleitbewegung geführt ist, wobei der Stopfen (16) das Antriebsmittel (27) des Verschlusses (6) in einer fluiddichten Weise zu isolieren vermag.

7. Ventilanordnung nach Anspruch 3, bei der das lineare Betätigungsmittel (31) eine Welle (34) umfasst, die mit einem Gabelkopf (38) versehen ist, welcher ein kugelförmiges Endstück (28), das an einem freien Ende des Stempels (14) ausgebildet ist, lösbar aufzunehmen vermag.

8. Verfahren zur Herstellung einer Ventilanordnung für Heizungssysteme und Wasserheizungsvorrichtungen nach Anspruch 1, mit den Schritten:
Bereitstellen eines Führungs- und Gleitsitzes (5) für einen Verschluss (6) stromaufwärts des mindestens einen Ventilsitzes (10a, 10b), wobei der Führungsund Gleitsitz (5) breiter ist als der Durchlass des mindestens einen Ventilsitzes (10a, 10b);
Einbringen eines Verschlusses (6) von im wesentlichen kugelförmiger Gestalt, der aus einem elastisch verformbaren Material besteht, in den Führungs- und Gleitsitz (5) durch Drücken desselben durch den mindestens einen Ventilsitz (10a, 10b);
Bereitstellen eines Antriebsmittels (27) für den Verschluss (6) stromabwärts des mindestens einen Ventilsitzes (10a, 10b).

## Revendications

1. Ensemble de soupape pour des systèmes de chauffage et des appareils de chauffage d'eau, comprenant :
un corps de soupape (2) dans lequel une ouverture d'entrée de fluide (7) et au moins une ouverture de sortie de fluide (8a, 8b) sont définies;
une voie d'écoulement (9a, 9b) s'étendant entre ladite ouverture d'entrée de fluide (7) et ladite au moins une ouverture de sortie de fluide (8a, 8b);
au moins un siège de soupape (10a, 10b) formé dans ledit corps de soupape (2) et positionné dans la voie d'écoulement (9a, 9b);
un volet (6) de forme substantiellement sphérique fabriqué en un matériau élastiquement déformable, pouvant être inversé par un moyen de commande (27) entre une première et une deuxième position dans lesquelles il ouvre et ferme respectivement ledit au moins un siège de soupape (10a, 10b), ledit volet (6) étant guidé pour un mouvement coulissant le long d'une trajectoire de déplacement substantiellement rectiligne dans un siège de guidage et de coulissement respectif (5) ayant une forme nettement ajustée, formé dans ledit corps de soupape (2);
**caractérisé en ce que** le volet (6) peut être introduit dans ledit siège de guidage et de coulissement (5) en comprimant le volet (6) à travers un desdits sièges de soupape (10a, 10b) et **en ce que** les dimensions respectives du volet (6) et dudit au moins un siège (10a, 10b) sont telles que le volet (6) peut être introduit dans ledit au moins un siège de soupape (10a, 10b) sans subir de déformations plastiques permanentes.

2. Ensemble de soupape selon la revendication 1, dans lequel le siège de guidage et de coulissement (5) pour le volet (6) est de forme substantiellement cylindrique et a nettement le même diamètre que le volet (6).

3. Ensemble de soupape selon la revendication 1, dans lequel le moyen de commande (27) comprend un moyen actionneur linéaire (31) disposé pour agir sur une tige (14) fixée au volet (6) et commandée par un moteur électrique (29).

4. Ensemble de soupape selon la revendication 1, dans lequel le volet (6) est fabriqué en une matière sélectionnée dans le groupe comprenant : le caoutchouc acrylonitrile (NBR), le caoutchouc polychloroprène (CR), l'élastomère fluorocarboné (FP), et les terpolymères éthylène-propylène-diène (EPDM).

5. Ensemble de soupape selon la revendication 1, dans lequel ledit au moins un siège de soupape (10a, 10b) comprend une surface évasée (12), formée d'un côté opposé par rapport à un bord du contact d'étanchéité (11) avec le volet (6), ladite surface évasée ayant un angle d'évasement (α) de 15° à 40°.

6. Ensemble de soupape selon la revendication 1, comprenant en outre un obturateur (16), monté de manière étanche à l'intérieur d'une partie tubulaire cylindrique (17) intégralement formée avec ledit corps de soupape (2), à travers lequel la tige (14) de volet (6) est guidée pour un mouvement coulissant, ledit (16) étant adapté pour isoler de manière étanche le moyen de commande (27) du volet (6).

7. Ensemble de soupape selon la revendication 3, dans lequel le moyen actionneur linéaire (31) comprend un axe (34) équipé d'une tête à fourche (38) adaptée pour recevoir de manière amovible une pièce d'extrémité (28) formée sur une extrémité libre de la tige (14).

8. Procédé de fabrication d'un ensemble de soupape pour systèmes de chauffage et appareils de chauffage d'eau selon la revendication 1, comprenant les étapes consistant à :
réaliser un siège de guidage et de coulissement (5) pour un volet (6), en amont dudit, au moins un, siège de soupape (10a, 10b), ledit siège de guidage et de coulissement (5) étant plus large que le passage dudit, au moins un, siège de soupape (10a, 10b);
introduire un volet (6) de forme substantiellement sphérique et fabriqué en une matière élastiquement déformable dans ledit siège de guidage et de coulissement (5) en comprimant le volet à travers ledit, au moins un, siège de soupape (10a, 10b);
fournir un moyen de commande (27) pour le volet (6) en aval dudit au moins un siège de soupape (10a, 10b).
